# DEMANDE DE BREVET EUROPEEN

(11) **EP 1 253 799 A1**
(43) Date de publication de la demande: **30.10.2002**
(21) Numéro de dépôt: 02291005.3
(22) Date de dépôt: 19.04.2002
(51) Int. Cl.: H04Q 7/38

(54) **Procédé et dispositif de localisation d'un mobile au sein d'un reseau de communication**

(30) Priorité: 27.04.2001 FR 0105734
(71) Demandeur: Thales, 75008 Paris (FR)
(72) Inventeur: Delaveau, Francois, Thales IP, 94117 Arcueil C-dex (FR); Josset, Dieudonné, Thales IP, 94117 Arcueil C-dex (FR)
(74) Mandataire: Dudouit, Isabelle

(57) **Abrégé**

Procédé et dispositif pour la détection d'un ou de plusieurs mobiles au sein d'un réseau de communication comportant au moins une étape « d'acquisition» d'au moins un signal échangé de type RACH entre un mobile et une station de base du réseau et une étape de mesure d'angle d'arrivée du signal, l'étape de mesure étant synchronisée sur un paramètre du signal échangé.

Application au réseau GSM

## Description

La présente invention concerne un procédé et un système permettant de détecter et/ou de localiser la présence d'un ou de plusieurs mobiles au sein d'un réseau de communication, en interceptant un signal échangé entre un mobile et le réseau. Le réseau est par exemple un réseau de communication cellulaire.

L'invention s'applique notamment dans les réseaux GSM.

Elle est par exemple utilisée pour la détection et la localisation d'appels d'urgence.

Elle s'applique aussi pour la mesure de densité de trafic routier en dénombrant les mobiles présents dans une zone donnée, par exemple sur un axe routier.

Elle s'applique aussi dans tous les réseaux de communication cellulaire, de caractéristiques temporelles et fréquentielles connues, où les signaux échangés entre un mobile et une station de base ont des formes d'onde de structure données et présentent des séquences connues a priori (séquences d'apprentissage, codes de synchronisation etc.).

L'art antérieur décrit différentes méthodes et dispositifs adaptés à localiser des appels d'urgence et/ou à réaliser une mesure de densité de trafic à partir de réseau GSM.

Par exemple, une solution consiste à modifier les postes radio mobiles ou la carte SIM (Subscriber Identity Mobile) afin d'introduire une fonction de localisation au sein du poste radiomobile (généralement de type mini-récepteur GPS ou mesures de champs sur les cellules serveuses et voisines) et une fonctionnalité d'envoi des résultats de mesure du mobile, sous forme de message court, au réseau qui les exploite pour localiser le mobile. Une telle solution suppose toutefois d'adapter ou de renouveler l'ensemble des postes radiomobiles GSM existants, ce qui correspond actuellement à plusieurs centaines de million de postes répartis dans le monde.

Une autre solution consiste à exploiter la signalisation réseau sur l'interface « Abis » ou sur l'interface A. A partir de logiciels travaillant au niveau du réseau, il est possible de localiser des postes radiomobiles en mettant en oeuvre diverses méthodes telles que des mesures de champ radioélectrique, de différence de temps d'arrivée ( en abréviation TDOA pour Time Difference of Arrival), du pistage entre cellules, etc. Les interfaces « Abis » et « A » sont décrites, par exemple, dans le livre intitulé « Réseaux GSM-DCS » de X.Lagrange, P.Gdlewski et S.Tabbane aux éditions hermes Science 4^{ème} édition.

Ces solutions présentent toutefois certains inconvénients :
- elles conduisent à une faible précision et une fiabilité discutable des localisations obtenues, à cause notamment des fortes fluctuations de propagation des signaux radioélectriques et du débit relativement faible du système GSM, 270k bauds, par exemple,
- elles obligent à remplacer le parc de mobiles existants (récepteur GPS).

L'objet de la présente invention vise un dispositif et un procédé qui permettent notamment de détecter des mobiles présents dans un réseau de type cellulaire ou dans une zone couverte par le réseau. Les données sont exploitées pour en déduire, par exemple, une densité de trafic routier ou encore localiser des appels d'urgence.

L'invention concerne un procédé pour la détection d'un ou de plusieurs mobiles au sein d'un réseau de communication. Le procédé est caractérisé en ce qu'il comporte au moins une étape « d'acquisition » d'au moins un signal échangé entre un mobile et une station de base du réseau et une étape de mesure d'angle d'arrivée du signal, l'étape de mesure étant synchronisée sur un paramètre du signal échangé. La station de base correspond au point d'entrée d'un mobile sur un réseau.

Le signal échangé est par exemple émis à partir d'un mobile vers une station de base du réseau, le mobile pouvant être sollicité à des instants donnés.

Selon une variante de mise en oeuvre, le procédé comporte une étape de datation du signal échangé.

L'étape de mesure de l'angle d'arrivée est par exemple réalisée pour une ou plusieurs valeurs d'angles afin de localiser le ou les mobiles.

Le procédé peut comporter une étape de détermination du temps de propagation du signal entre un mobile et une station de base.

Il peut aussi comporter une étape de traitement du signal reçu par la station de base, telle qu'une étape de démodulation afin de déterminer la nature de l'appel et/ou une étape de tri du signal à partir de l'information sur la datation et des données démodulées.

Le procédé comporte par exemple une étape de dénombrement d'un ou de plusieurs mobiles présents dans un endroit donné afin de déterminer la densité correspondante de mobiles.

Le procédé s'applique à des réseaux de de communication GSM et/ou en utilisant des signaux échangés de type RACH.

L'invention concerne aussi un dispositif pour la détection d'un ou de plusieurs mobiles dans un réseau de communication. Le dispositif comporte au moins :
- un élément adapté pour recevoir les signaux échangés entre un ou plusieurs stations mobiles et le réseau,
- un élément de synchronisation du déclenchement de la mesure d'au moins un angle d'arrivée du signal échangé,
- un processeur adapté à traiter les signaux reçus et à gérer les différents éléments.

L'élément de réception des signaux échangés est par exemple un réseau antennaire comprenant cinq antennes.

L'élément permettant la synchronisation et l'élément de réception des signaux sont intégrés dans un même élément.

Le processeur est par exemple adapté pour effectuer des mesures de goniométrie et gérer la synchronisation des tirs du goniomètre, il peut aussi comporter une application locale adaptée à gérer les informations fournies par une interface du réseau Abis.

Le processeur comporte par exemple une application système afin de centraliser les données en provenance de différentes applications locales.

L'invention concerne aussi un système de détection d'un ou de plusieurs mobiles au sein d'un réseau de communication, comportant au moins un dispositif pour la détection d'un ou de plusieurs mobiles comprenant une des caractéristiques précitées.

L'exploitation directe du signal radioélectrique émis et/ou reçu par les postes radiomobiles, et ce, indépendamment du réseau cellulaire qui accueille le système, de la structure des postes mobiles et des signaux radioélectriques, confère à l'invention notamment les avantages suivants :
- aucune modification des mobiles n'est nécessaire, l'invention fonctionne avec les mobiles existants,
- aucun outil spécifique de gestion n'est nécessaire au sein du réseau, les mesures effectuées se font indépendamment du réseau,
- le procédé peut être couplé à des procédures de gestion de réseau existantes ou être associé à des applications de type cartographique.

D'autres avantages et caractéristiques de l'invention apparaîtront mieux à la lecture de la description qui suit où sont proposés des exemples de mise en oeuvre du dispositif et du procédé selon l'invention à titre illustratif, ceci en référence aux figures annexées qui représentent :
- La figure 1 un exemple d'application de l'invention dans un réseau cellulaire GSM,
- La figure 2 un exemple de capteur radioélectrique selon l'invention,
- La figure 3 un exemple de structure générale d'un système utilisant un capteur selon l'invention,
- La figure 4 un exemple de résultats obtenus dans le cadre d'une mesure de densité,
- La figure 5 un exemple de structure de l'application goniométrie,
- La figure 6 un exemple d'application à une interface Abis.

Afin de mieux faire comprendre l'objet de la présente invention, la description qui suit est donnée pour la détection de mobile dans un réseau GSM, à titre illustratif et nullement limitatif.

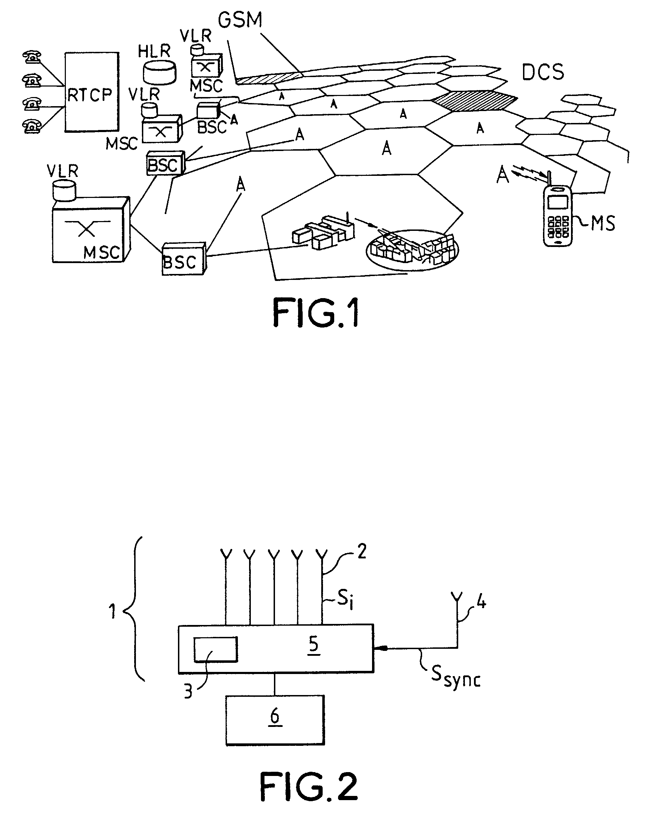

La figure 1 rappelle brièvement un exemple d'architecture d'un réseau cellulaire GSM comportant par exemple, une station mobile MS, un sous-système radio ayant une fonction de contrôle assurée par les BSC (abrégé anglo-saxon de Base Station Controller) et une fonction de transmission réalisée par les BTS (abrégé anglo-saxon de Base Transmitter Station), un sous-système réseau comportant par exemple un commutateur comprenant un registre des abonnés visiteurs VLR (Visitor Location Register) et un registre des abonnés nominaux HLR (Home Location Register). Une telle architecture étant connue de l'Homme du métier, des informations plus détaillées peuvent être trouvées dans la référence précitée.

Les transmissions de données entre le réseau et les mobiles (ou les abonnés) utilisent par exemple des multitrames de type BCCH/CCCH (canaux diffusés/canaux de contrôle communs).

La trame échangée entre la station de base et le mobile comprend par exemple des informations utiles pour synchroniser des mesures d'angle ou goniométrie, selon un schéma explicité plus loin dans la description.

L'invention consiste notamment à utiliser au sein d'un réseau de communication cellulaire, un capteur spécifique dont un exemple d'architecture est donné à la figure 2. Ce capteur est basé sur une architecture matérielle d'analyseur d'interférences ou de radiogoniomètre mono dimensionnel terrestre bande étroite.

Le capteur radioélectrique 1 décrit à la figure 2 comporte un dispositif 2 de réception des signaux échangés entre un mobile et une station de base d'un réseau (figure 1), par exemple un réseau antennaire de goniométrie comportant cinq antennes, un commutateur 3 d'antennes permettant de réaliser le tarage des antennes, une antenne 4 de réception utilisée par exemple pour synchroniser l'instant où le procédé va déclencher une mesure d'angle ou goniométrie. Les éléments 2, 3 et 4 forment ensemble un récepteur 5 comprenant six voies avec module de tarage. Ce récepteur est en liaison avec un processeur 6 ou calculateur équipé d'un logiciel adapté notamment à gérer les différents éléments du capteur radioélectrique, à effectuer la détection et le traitement des signaux reçus et éventuellement d'autres informations provenant d'éléments extérieurs.

L'antenne est par exemple une antenne réseau calibrée. Elle est éventuellement associée à des filtres en tête centrés sur les bandes GSM, plus généralement sur des bandes de fréquence du réseau, afin d'annuler la réception des émissions en co-sites et faciliter de ce fait l'installation du système, par exemple sur des pylônes en bord d'axes routiers, à proximité d'émetteur FM, etc. ou encore dans tout environnement où la place prévue est limitée.

Le commutateur 3 est un dispositif connu de l'Homme du métier qui permet un tarage des voies de réception en amplitude et en phase.

Le récepteur six voies est par exemple un récepteur de bande instantanée 300 KHz, muni d'un module de tarage pour la phase et la calibration du capteur. Cinq voies sont utilisées pour la goniométrie par exemple (elles reçoivent les signaux Si) et la sixième pour la synchronisation du déclenchement de la mesure d'angle ou goniométrie (elle envoie un signal de synchronisation Ssync).

Le calculateur 6 est par exemple un micro-ordinateur de type PC industriel, muni de 2 cartes DSP spécifiques pour le pilotage du récepteur et les traitements des données et des signaux. Il intègre par exemple différentes cartes d'acquisition et de traitement de signal qui sont équipées de logiciels permettant de dérouler les algorithmes de mesure sur les signaux échangés entre le ou les mobiles et le réseau. Les logiciels seront par exemple choisis en fonction des signaux échangés lors de l'accès au réseau (nommés RACH (Random Acces Channel) dans les réseaux cellulaires).

Le logiciel équipant le calculateur est adapté pour détecter des signaux reçus par un mobile ou une station de base du réseau cellulaire et pour synchroniser le déclenchement de la mesure goniométrique, en utilisant par exemple une caractéristique des signaux échangés au sein d'un réseau.

Selon un mode de réalisation, il comporte :
- une application locale « goniométrie » assurant la gestion de la synchronisation des tirs du goniomètre (instants où la mesure de goniométrie est réalisée) et l'exploitation des résultats de goniométrie,
- une application locale « Abis» qui assure la gestion des informations fournies par l'interface Abis, notamment le type d'accès, réponse à une demande de localisation (LU, abréviation de Location Update) ou appel d'urgence,
- une application système, centralisant si nécessaire les données en provenance des différentes applications locales.

Il peut aussi disposer d'une interface Homme-Machine permettant d'insérer des données de planification du réseau et de transmettre des résultats obtenus par le procédé selon l'invention localement vers un centre de traitement approprié (non représenté sur les figures).

Le calculateur dispose par exemple d'une entrée sur les BTS (Base Transceiver Station), équipement composé des émetteurs/récepteurs radio et constituant l'interface entre les BSC (Base Station Controller) et les mobiles (sonde Abis).

Dans le cas d'une application sur des signaux RACH, le capteur est adapté à mettre en oeuvre les étapes suivantes :
- L'extraction de données réseau diffusées dans les messages BCCH (Broadcast Control Channel) lors de la phase de préparation,
- La synchronisation externe du déclenchement de la mesure de goniométrie sur une trame TDMA (Time Division Multiple Access) émise par la cellule ou par la BTS d'après l'interface Abis ou d'après BCCH si nécessaire, la détection et la datation des arrivées des signaux RACH par exemple, le dénombrement des mobiles émettant un signal RACH par exemple,
- La goniométrie des mobiles émettant un signal RACH.

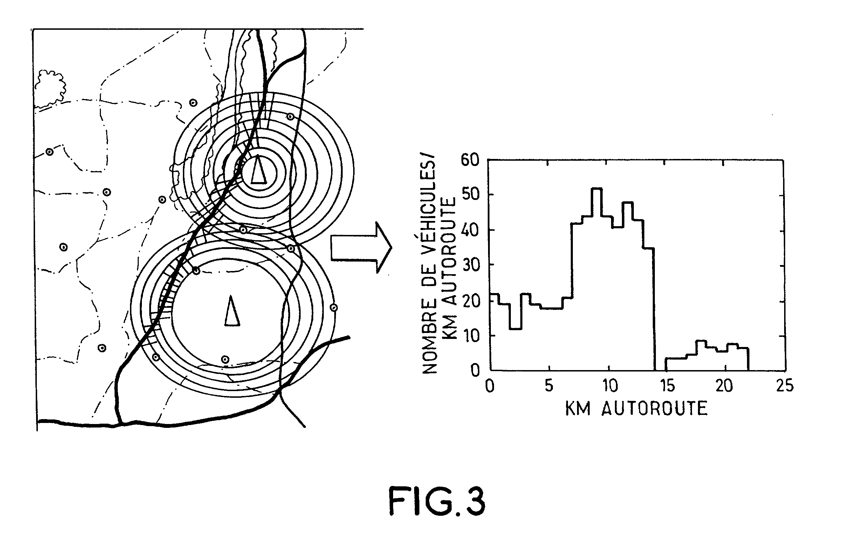

Sans sortir du cadre de l'invention, il est possible d'utiliser plusieurs capteurs mis en système par l'intermédiaire de moyens de liaisons vers un centre de traitement de données afin de produire les mesures de densités de trafic (figure 3) ou de fournir aux services d'appel d'urgence la localisation de l'appel.

Selon un autre mode de mise en oeuvre, le capteur selon l'invention est associé à des équipements périphériques pour faciliter l'extraction des données "réseau" (phase de préparation ou d'initialisation). Ces équipements sont par exemple, des mobiles de trace, des systèmes de localisation GPS, un extrait de la base de données de planification du réseau fournie par l'opérateur de télécommunications, des équipements réseaux de type sondes par exemple sur l'interface Abis avec les filtres associés.

Des exemples d'intégration du capteur dans des structures plus complexes sont donnés aux figures 3 à 6.

Avant d'expliciter la mise en oeuvre de telles structures, le principe du procédé mis en oeuvre est exposé ci-après dans le cas d'un réseau GSM, où l'on exploite les signaux RACH émis par des mobiles dans un état de veille.

### Etapes mises en oeuvre dans le procédé

Le procédé selon l'invention comporte par exemple les étapes suivantes :

### Etape 1

1 - positionner un capteur tel que décrit à la figure 2 sur les fréquences balises montantes (fréquences BCCH moins l'écart duplex en fréquence) correspondant à la cellule serveuse et/ou aux cellules voisines. Les fréquences sont par exemple soit repérées à l'aide d'un mobile de trace ou de tout autre équipement radioélectrique permettant de relever la planification du réseau (répartition géographique des fréquences sur les BTS) soit regroupées dans une base de données fournie par l'opérateur de télécommunications propriétaire du réseau.

### Etape 2

2 - solliciter un ou plusieurs mobiles en veille afin de provoquer des émissions de leur part (génération d'une émission sur le canal RACH par exemple). Les émissions sont par exemple sollicitées au moyen d'une procédure de réseau telles que la procédure « location update » ou la procédure « paging request » ou encore de manière naturelle en utilisant les réglages prévus (cas où des excitations du canal RACH sont effectuées en dehors d'un location update) pour la gestion du réseau. Elles peuvent aussi être sollicitées de manière forcée à l'aide d'émetteurs appropriés tels que des stations de base mobile programmées à cet effet.

Le mobile émet un signal RACH, par exemple, lors d'un changement de zone de localisation (ZLAC), lors d'une procédure de paging ou d'une procédure de relocalisation (Location Update) initié par le mobile, lors d'un appel entrant/sortant, ou consécutivement à une perte réseau (causée par exemple par un brouillage ou tout autre type de dysfonctionnement)

Il est aussi possible d'exploiter des procédures de Location Update périodique avec des périodes réduites à la durée hypertrame (environ 6 minutes).

### Etape 3

3 - le calculateur 6 enregistre et traite les signaux reçus en temps différé ou il traite les signaux en temps réel, sur des intervalles de temps statistiquement significatifs compte tenu de la période des émissions des signaux RACH. Les intervalles de temps dépendent par exemple de la méthode de sollicitation retenue à l'étape 2.

### Etape 4

4 - le calculateur 6 déclenche une étape de détection et de dénombrement des signaux d'accès et des mobiles en veille selon des méthodes connues de l'Homme du métier.

### Etape 5

5 - au cours d'une cinquième étape, le calculateur déclenche une étape de mesure d'angle, ou mesure de goniométrie. La mesure est déclenchée par exemple en exploitant les informations contenues dans le « canal de synchronisation SCH » (en anglais Synchronisation Channel) présent dans les canaux de signalisation diffusés sur la « fréquence balise » de la cellule allant du réseau vers le mobile et des porteurs des informations pour la synchronisation des trames ainsi que l'identification de transmetteur de la base BTS et de la cellule. La synchronisation est par exemple réalisée en fonction des environnements radioélectriques et de la structure matérielle considérée pour le produit final par des techniques mono-voies (environnement par deux) ou par des techniques multivoies très sensibles et performantes en environnement multi-sources denses.
   Les cinq étapes détaillées ci-dessus peuvent être associées aux étapes suivantes :
6 - l'étape de mesure de goniométrie peut être associée à une mesure du temps de propagation du mobile par rapport à la BTS, (mesure du Timing Advance), ce qui permet d'associer une mesure de distance à la mesure d'angle et ainsi de mieux localiser le mobile.
7 - en adjoignant aux mesures d'angle ou de goniométrie, de datation, de temps de propagation mobile décrits ci-dessus, une étape de démodulation du canal RACH intercepté sur la voie radio (possible si la collaboration avec le réseau opérateur n'est pas suffisante) le calculateur peut déduire la raison de l'appel (location update périodique, réponse à une recherche d'abonné connu sous l'expression « paging », appel d'urgence 112 qui se traduit par la présence d'un code spécifique dans le message émis dans le signal RACH) ainsi
8 - qu'une reconnaissance de l'appel permettant d'identifier la raison de l'appel (localisation périodique, appel d'urgence, ...) ainsi qu'un identifiant définissant l'appelant (Identifiant RA du message RACH pour le réseau GSM) rendant possible un tri des appels.

La collaboration avec le réseau de communication permet notamment :
- de travailler sur les signaux d'accès émis lors d'une demande de relocalisation périodique du mobile (Location Update) dont le réseau contrôle la période supérieure ou égale à 6 minutes et dont les sondes sur l'interface Abis peuvent fournir :
   - la localisation géographique, à l'échelle de la cellule,
   - la date,
   - la raison (Location Update, appel entrant/sortant, appel d'urgence, etc.),
- de couvrir, a priori, de larges étendues géographiques en simplifiant le travail de la partie radio de l'invention.

La localisation du mobile est par exemple obtenue en combinant les mesures d'angle d'arrivée et les mesures de temps de parcours ou encore en combinant les mesures d'angle d'arrivée effectuées sur plusieurs capteurs.

### Premier exemple d'application estimation de trafic routier

Un exemple de mise en oeuvre du procédé selon l'invention consiste à évaluer la densité de trafic routier en comptabilisant le nombre de détections/localisations de mobiles par « portion de route » élémentaire. La base de cette fonction est la capacité de dénombrement des émissions, associée à une localisation mettant en oeuvre les étapes 1, 2 et 3 précitées pour le procédé.

Associée à une démodulation des signaux RACH (étape 7 précitée) soit à partir du signal radio, soit par prélèvement sur l'interface Abis, il est possible de trier les différents appels tels que location update, appel entrant/sortant, etc.

Avantageusement, il est possible d'améliorer les résultats d'évaluation de la densité de trafic routier en utilisant les signaux SDCCH et TCH sur les fréquences correspondantes d'après les listes des fréquences allouées au mobile et disponibles soit après démodulation des canaux BCCH (mobile de trace) soit fournies par la planification réseau. Pour cela, une association des différents signaux RACH émis par un même mobile est nécessaire : elle est réalisée en exploitant ces signaux et les éventuels paramètres démodulés dans le signal radio ou extrait de la signalisation sur l'interface Abis (par exemple connu sous les expressions « Establishment cause », « Random Access »).

Les données produites se présentent sous la forme donnée à la figure 3 concernant une zone géographique comprenant deux capteurs 10, 11 présentant des caractéristiques identiques au capteur de la figure 2. Ces deux capteurs détectent les mobiles présents dans deux zones 12, 13. Le diagramme donne le nombre de véhicules détectés par km-autoroute (axe des ordonnées) en fonction du km-autoroute concerné (axe des abcisses).

Selon une autre variante de mise en oeuvre du procédé, il est possible de séparer les mobiles présents sur les axes routiers des autres mobiles et aussi le trafic selon le sens de circulation sans que le système radio électrique de comptage et de localisation ait connaissance de l'identité du mobile. Pour cela, plusieurs options complémentaires peuvent être envisagées, dont certaines sont listées ci-après à titre indicatif :

### Utilisation des procédures réseau normalisées et déjà implantées au sein du réseau de communication cellulaire GSM

La sollicitation des mobiles est provoquée dans certaines cellules du réseau par modification de la période des procédures « location update » périodiques (indiquée dans le BCCH).

Des sondes sur les interfaces Abis des cellules couvertes par le système (par exemple les cellules gérées par un même BSC) permettent de trier les appels, et de simplifier le travail du radiogoniomètre en lui indiquant :
- la cellule,
- la date de l'émission (par remontée de signalisation),
- l'identité de l'appelant RACH (Identifiant RA), la raison de l'appel,
- éventuellement l'identité du mobile (TMSI),
- éventuellement le sens de transit du mobile.

### Utilisation de procédures actives sur le réseau de communication cellulaire GSM

D'autres sollicitations sont possibles mettant en oeuvre des techniques spécifiques à la gestion de réseau et à la logique des procédures d'itinérance :
**Méthode 1** : Le choix des mobiles interrogés est fait par le MSC qui sélectionne, par tranche horaire et par zone géographique, les mobiles à solliciter par des procédures de location update ou de paging. Ces mobiles peuvent être présents n'importe où dans la zone géographique de sollicitation, sur l'axe routier ou non, dans un sens de transit ou non et c'est ensuite le système de comptage et localisation qui les détecte sur les axes routier et qui sépare les sens de transit. La séparation des sens de transit peut par exemple être effectuée dans ce cas par deux mesures de comptage à quelques km de distances (sur des cellules différentes).
**Méthode 2** : Le choix des mobiles à interroger est réalisé à l'occasion d'un changement de zone de localisation (relevé des mobiles pour une sélection ultérieure par le MSC des mobiles sur TMSI par exemple). Pour cela, une possibilité est que le réseau introduise une frontière entre les zones de localisation traversant les axes routiers. A ce niveau, ce choix des mobiles ne fait pas la distinction entre les sens de transit, ni même entre les mobiles effectivement présents sur l'axe routier et les autres. Le système de dénombrement et de localisation, déployé à quelques kilomètres en amont ou aval, ne détecte alors que les mobiles sur l'axe routier correspondant à l'un des sens de transit.
**Méthode 3 :** La sollicitation des mobiles est réalisée de manière suffisamment locale à l'aide d'un émetteur ou d'une BTS de portée confinée (dans les quelques centaines de mètres précédant ou suivant un péage, sur une portion de route dont les sens sont séparés par le relief, un virage, un tunnel, ou depuis un pont, etc.) pour que seuls les mobiles correspondant à un sens de circulation répondent. Ces derniers seront ensuite sollicités ultérieurement par une procédure de location update ciblée.
**Méthode 4** : La sollicitation des mobiles est réalisée comme ci-dessus (méthode 3) mais deux fois par deux zones de localisation successives de faible couverture (quelques centaines de mètres, par exemple une avant un péage sur une route ou autoroute et l'autre après le péage). L'ordre des transitions entre ces deux LAC « artificielles » (abréviation anglo-saxon de Local Area Code) donne alors le sens de transit des mobiles.

### Deuxième exemple d'application : détection d'un appel d'urgence

Le procédé selon l'invention peut aussi être utilisé pour détecter un appel d'urgence à l'aide des moyens précédemment utilisés pour estimer le trafic routier.

Elle nécessite d'effectuer, parallèlement à la localisation du mobile, un accès au contenu du message inclus dans le RACH, le contenu décrivant la raison de l'appel (détection du motif d'appel d'urgence) soit en démodulant le signal radio échangé entre le mobile et la station de base, soit en utilisant la signalisation réseau (sonde Abis).

La localisation de l'appel d'urgence est par exemple associée à une identification du mobile appelant, au moyen de la connaissance de l'identifiant du mobile (TMSI) a priori, soit démodulé dans le message connu sous l'expression « paging response », soit fourni par la signalisation (sonde Abis) permettant au réseau de retrouver l'identifiant IMSI (abréviation anglo-saxone de International Mobile Subscriber Identity) par consultation du registre VLR (Visitor Location Register).

Les bases de cette fonction de localisation d'appel d'urgence sont par exemple :
- la goniométrie et la datation précises de la source émettant le message (étapes 1, 2 et 3 précitées du procédé),
- le filtrage des messages RACH correspondant aux appels d'urgence soit par démodulation des signaux radioélectriques, soit par prélèvement sur interface Abis (étapes 7 et 8 précitées).

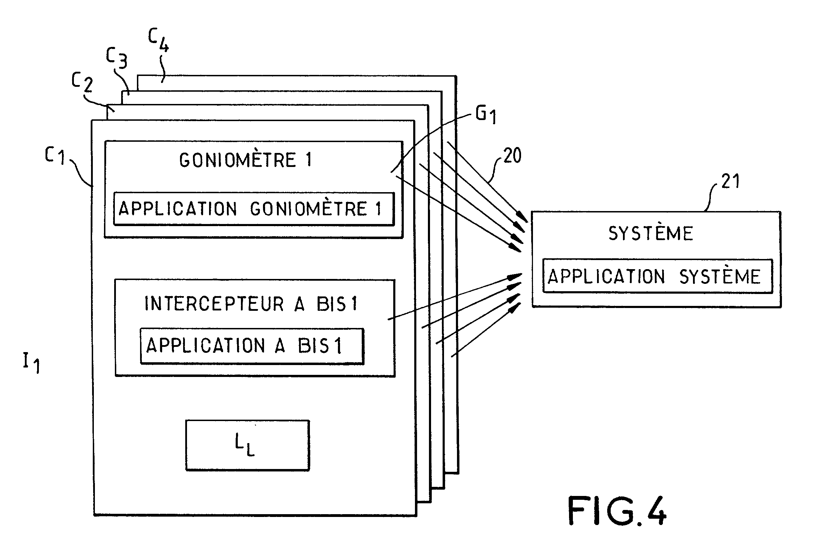

La figure 4 est un exemple d'un système complet composé d'un ensemble de capteurs Ci, d'un goniomètre Gi pour chaque capteur Ci, d'une application associée comprenant un intercepteur Abis et son application, référencés li, d'une application locale Li permettant de stocker les résultats et aussi d'un système 21 d'exploitation des résultats transférés (flèches 20) et son application associée.

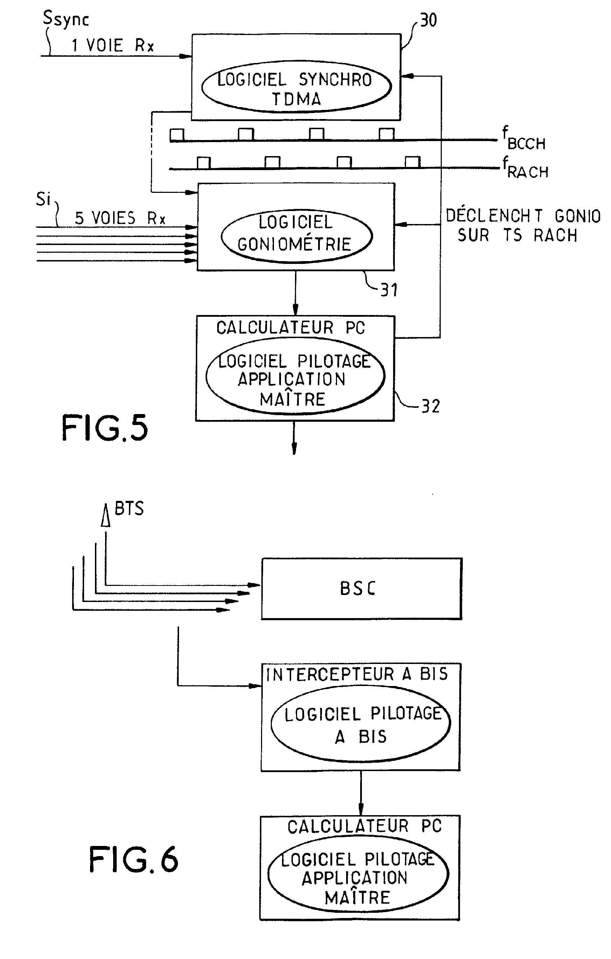

La figure 5 représente une structure possible pour l'application de goniométrie.

Les données fournies par l'application « goniomètre » sont pour l'essentiel :
1- les datations précises du signal et du tir goniomètrique tel que défini précédemment,
2- la direction angulaire de la source émettant le signal et éventuellement
3- la cellule, la zone de localisation, la fréquence BCCH, le paramètre "numéro de trame" (nommé « Frame number » dans la norme GSM), le paramètre « Time Advance » du mobile, par démodulation/décodage des messages radiodiffusés sur les canaux BCCH et par des mesures de synchronisation entre RACH et BCCH,
4- les paramètres "raison d'appel" (nommé « establishment cause » dans la norme GSM) et "numéro d'appel" (nommé « Random Access » dans la norme GSM) démodulés dans les signaux RACH permettant d'en effectuer le tri.

La structure comporte une première carte fille 30 de type deux voies acquisition rapide qui reçoit, d'une part le signal de synchronisation Ssync ayant pour fonction de synchroniser les acquisitions du signal Si échangé entre un mobile et le réseau, d'autre part une information d'un calculateur 32 équipé d'un logiciel de pilotage ou application maître. Le logiciel est conçu pour piloter l'acquisition du signal échangé sur la fréquence concernée par la cellule sur laquelle est recherché l'appel d'urgence. La carte fille est reliée directement à une deuxième carte ou carte mère ayant notamment pour fonction de traiter les données.

Une deuxième carte ou carte mère 31 est pourvue d'un logiciel de goniométrie. Elle reçoit d'une part le top de synchronisation Tsync en provenance de la première carte fille et les signaux Si reçus par le réseau d'antennes du capteur (figure 2), par exemple cinq voies. Le logiciel de goniométrie permet d'obtenir des fichiers contenant les dates et les localisations angulaires des mobiles, qui sont transmis au calculateur 22, de type PC par exemple, équipé des outils nécessaires au traitement des différentes informations. Le top de synchronisation Tsync peut être un top synchro SCH ou Abis, ou encore un top synchro goniométrie RACH. La goniométrie peut aussi être déclenchée sur un signal TS RACH.

La figure 6 représente un exemple d'application du procédé en utilisant les propriétés de l'interface « Abis ».

Les données fournies par cette application « Abis » sont pour l'essentiel :
1- la datation précise de l'émission des bursts RACH par les mobiles, un burst désignant un élément de signal transmis par un équipement à l'intérieur d'un slot en TDMA,
2- la numéro de trame correspondant (ou « Frame Number »), le paramètre temps de propagation, mobile-BTS (ou Time Advance),
3- le BSC (Base Station Controller), la cellule, la fréquence BCCH correspondante,
4- la raison de l'appel ou « establishment cause » (LU abréviation de location update périodique, appel d'urgence), le paramètre d'accès aléatoire ( Random Access) correspondant, l'identité temporaire attribuée par le réseau au mobile ( TMSI) et le tri des appels
   et éventuellement
5- les paramètres des messages « channel assignment » relatifs au SDCCH (Stand Alone Dedicated Control Channel) et au TCH, notamment les paramètres HSN (Hopping Sequence Number), MAIO (Mobile Allocation Index Offset), TN (Time Slot Number), starting time, etc.
6- les paramètres NRAND (Random Number), SRES (Signed Result) etc. qui permettraient au futur système de confirmer ultérieurement par l'accès radio aux messages SDCCH les informations Abis.

La structure s'interface par exemple entre un contrôleur de station de base (BSC) (Base Station Controller) et les stations de base (BTS). Un échange de données est par exemple réalisé entre l'interface Abis et la structure de l'application goniomètre pour réaliser le procédé de localisation.

## Revendications

1. Procédé pour la détection d'un ou de plusieurs mobiles au sein d'un réseau de communication **caractérisé en ce qu'**il comporte au moins une étape « d'acquisition » d'au moins un signal échangé entre un mobile et une station de base du réseau et une étape de mesure d'angle d'arrivée du signal, l'étape de mesure étant synchronisée sur un paramètre du signal échangé.

2. Procédé selon la revendication 1 **caractérisé en ce que** le signal échangé est un signal émis à partir d'un mobile vers une station de base du réseau.

3. Procédé selon la revendication 1 **caractérisé en ce qu'**il comporte une étape où le mobile est sollicité à des instants donnés.

4. Procédé selon l'une des revendications 1 à 3 **caractérisé en ce qu'**il comporte une étape de datation du signal échangé.

5. Procédé selon la revendication 4 **caractérisé en ce que** l'étape de mesure de l'angle d'arrivée est réalisée pour une ou plusieurs valeurs d'angles afin de localiser le ou les mobiles.

6. Procédé selon l'une des revendications 1 à 5 **caractérisé en ce qu'**il comporte une étape de détermination du temps de propagation du signal entre un mobile et une station de base.

7. Procédé selon l'une des revendications 5 et 6 **caractérisé en ce qu'**il comporte une étape de traitement de signal reçu par la station de base, telle qu'une étape de démodulation afin de déterminer la nature de l'appel.

8. Procédé selon la revendication 7 **caractérisé en ce qu'**il comporte une étape de tri du signal à partir de l'information sur la datation et des données démodulées.

9. Procédé selon l'une des revendications 1 à 6 **caractérisé en ce qu'**il comporte une étape de dénombrement d'un ou de plusieurs mobiles présents dans un endroit donné afin de déterminer la densité correspondante de mobiles.

10. Application du procédé selon l'une des revendications 1 à 9 à un réseau de communication GSM.

11. Application du procédé selon l'une des revendications 1 à 10 à un réseau GSM, pour des signaux échangés entre un mobile et une station de base de type RACH.

12. Dispositif pour détecter un ou plusieurs mobiles dans un réseau de communication comportant au moins :
• un élément adapté pour recevoir les signaux échangés entre un ou plusieurs stations mobiles et le réseau,
• un élément de synchronisation du déclenchement de la mesure d'au moins un angle d'arrivée du signal échangé,
• un processeur adapté à traiter les signaux reçus et à gérer les différents éléments.

13. Dispositif selon la revendication 12 **caractérisé en ce que** l'élément de réception des signaux échangés est un réseau antennaire comprenant 5 antennes.

14. Dispositif selon la revendication 12 **caractérisé en ce que** l'élément de synchronisation et l'élément de réception des signaux sont intégrés dans un même élément.

15. Dispositif selon l'une des revendications 12 à 14 caractérisé en ce le processeur est adapté pour effectuer des mesures de goniométrie et gérer la synchronisation des tirs du goniomètre.

16. Dispositif selon l'une des revendications 12 à 14 **caractérisé en ce que** le processeur comporte une application locale permettant la gestion des informations fournies par une interface du réseau Abis.

17. Dispositif selon l'une des revendications 12 à 14 **caractérisé en ce que** le processeur comporte une application système afin de centraliser les données en provenance de différentes applications locales.

18. Système de détection d'un ou de plusieurs mobiles au sein d'un réseau de communication **caractérisé en ce qu'**il comporte au moins un dispositif selon l'une des revendications 12 à 17.
